# EUROPEAN PATENT SPECIFICATION

(11) **EP 3 878 649 B1**
(45) Date of publication and mention of the grant of the patent: **13.03.2024**
(21) Application number: 21166116.0
(22) Date of filing: 24.03.2017
(51) Int. Cl.: B32B 21/14

(54) **METHOD OF MANUFACTURING A WOOD VENEER PRODUCT AND A WOOD VENEER PRODUCT THUS OBTAINED**
VERFAHREN ZUR HERSTELLUNG EINES HOLZFURNIERPRODUKTS UND DADURCH ERHALTENES HOLZFURNIERPRODUKT
PROCÉDÉ DE FABRICATION D'UN PRODUIT DE PLACAGE DE BOIS ET PRODUIT DE PLACAGE DE BOIS AINSI OBTENU

(30) Priority: 24.03.2016 FI 20165249
(43) Date of publication of application: 15.09.2021
(62) Divisional of application: 17726340.7
(73) Proprietor: Metsäliitto Osuuskunta, 02100 Espoo (FI)
(72) Inventor: SOKKA, Kasperi, 44200 SUOLAHTI (FI); Militz, Holger, 37120 Bovenden (DE); Bicke, Sascha, 37441 Bad Sachsa (DE)
(74) Representative: Laine IP Oy

(56) References cited:
- WO-A1-2010/066944
- WO-A1-2015/169325
- GB-A- 1 317 763

## Description

The invention relates to a method for manufacturing a laminated wood-veneer product, in which method several layers of wood veneer are glued onto each other with the aid of a an adhesive resin in an increased temperature and pressure.

The invention also relates to a laminated wood-veneer product manufactured by using the method.

It is previously known to manufacture laminated wood-veneer products by coating the wood veneers with resin, stacking the wood veneers on top of each other, and heating and pressing the wood veneers, so that the resin hardens and binds the veneers to each other. The resins most generally used are phenol-formaldehyde resin, urea-formaldehyde resin, and melamine-formaldehyde resin.

It is also known to improve the properties of laminated wood-veneer products, such as stability, fire resistance, and rot resistance properties, by impregnation. The wood veneers are then first treated with impregnation resin, which is absorbed into the wood veneer. After drying, the impregnated wood veneers are coated with adhesive resin and stacked on top of each other. Finally, the stack of veneers is pressed in an increased temperature to harden the adhesive resin.

A small-molecule resin, such as a small-molecule phenol-formaldehyde resin, is often used as the impregnation resin, along with a fire-protection agent or rot-protection agent, which can be absorbed inside the wood veneer. The veneers are impregnated, for example, by using a soaking, pressure/vacuum, or other similar methods.

However, one problem among others is that the separate impregnation and drying of the wood veneers before gluing and hot pressing is difficult and time consuming.

Attempts have been made to solve the problem by mixing two types of resin, a long-chain adhesive resin and a short-chain impregnation resin. However, so much absorption into the wood veneers then occurs that a glued joint meeting the quality requirements is often not achieved.

In the method disclosed in FI patent publication 121623, a resin, preferably melamine resin, is spread on both surfaces of the previously unimpregnated wood veneers, which lie opposite to each other when stacked. In GB patent publication 567878 B, a manufacturing method of a laminated wood-veneer product is disclosed, wherein veneer sheets are impregnated with a resin of low molar mass before they are glued together. US patent publication 2008020200 A1 discloses a method for manufacturing a laminated wood product, wherein wood-veneer sheets are glued with an impregnated paper backing sheet. In the method according to US patent publication 3649442 A, wood sheets are impregnated with impregnation resin, then the sheets are coated with adhesive resin, stacked on top of each other, and pressed to a product at an increased pressure.

In US patent publication 4207379 A, a wood product is coated with a paper sheet impregnated with resins of low molar mass. In publication US 3470134 A, melamine-formaldehyde resin is manufactured for use in impregnation of paper sheet or veneer sheets of plywood. However, in these publications a laminated veneer product, wherein veneer sheets are joined together using adhesive resin, is not manufactured.

The present invention is intended to solve the problems of the prior art and create a manufacturing method for a laminated wood-veneer product, by means of which a durable laminated wood-veneer product with improved properties is produced, but by means of which difficult work stages are avoided.

Particularly the intention is to create a method, which produces both a good glued joint and the absorption of the impregnation resin into the veneer in such a way as to improve the properties of the veneers, such as rot resistance, insect resistance, fire resistance, and strength.

In one embodiment, the method according to the invention is based on bringing the impregnation resin between the wood-veneer layers, so that some part of the impregnation resin is absorbed in the veneers during the hot pressing. The impregnation resin can then be brought, for example, on top of a sheet or plate-like carrier, absorbed in a plate-like sheet (impregnated paper) or, without a carrier agent, in a sheet-like form in a high solids state. In a second embodiment, liquid impregnation resin is first absorbed in the wood veneers, so that essentially dry adhesive resin can be brought between the wood veneers and the wood-veneer layers glued to each other with the aid of the adhesive resin at an increased temperature and pressure.

In the method according to the invention for manufacturing a laminated wood-veneer product, at least some of the wood-veneer layers are impregnated with impregnation resin before the wood-veneer layers are glued to each other to form a laminated wood-veneer product, which can take place, for example, during the pressing of the sheet, particularly during hot pressing.

More specifically, the method according to the invention is defined in Claim 1.

For its part, the wood-veneer product according to the invention is characterized by what is stated in the characterizing portion of Claim 18 and the uses according to the invention by what is stated in Claims 19 and 20.

Considerable advantages are achieved by means of the invention. Thus, by absorbing impregnation resin into wood veneers by using the method according to the invention, it is surprisingly possible to achieve both a good glued joint and the absorption of the resin into the veneers to improve the properties of the laminated veneer product.

In the following detailed description, preferred embodiments are examined more closely, with reference to the accompanying drawings.
Figure 1 shows a side view of a cross-section of a wood-veneer sheet according to a first embodiment; and
Figure 2 shows a side view of a cross-section of a wood-veneer sheet according to a second embodiment.

In the present context, the term "wood-veneer product" refers to a product, for example, a laminated board, plywood, or wood board, formed of wood veneers comprising a wood material or wood-fibre-based material. The wood material is typically coniferous or deciduous wood, such as birch, aspen, pine, spruce, or some other suitable tree species, preferably birch.

In the present context, the term "adhesive resin" refers to any, as such known, adhesive or mixture substantially containing it, which may also contain a hardener. Typical adhesives are thermosetting resins, of which phenol resins can be separately referred to as examples. These are typically formed of the reaction products of phenol, *o-, m-,* and p-cresol, *p*-t-butyl-phenol, *p*-octyl-phenol, *p*-nonyl-phenol, *p*-phenyl-phenol, bisphenol A, and/or resorcinol with formaldehyde, acetaldehyde, paraldehyde, glyoxal, and/or furfural. Other resins that can be referred to include melamine-formaldehyde (mf), urea-formaldehyde (uf), polyurethane (pu), methylene-diphenylene-diisocyanate (mdi), polymeric methylene-diphenylene-diisocyanate (pmdi), edmi or edfi, and mixtures of these. Emulsion-polymer isocyanate dispersions and polyurethane-hotmelt adhesives are also possible.

An especially preferred resin is phenol-formaldehyde resin.

In the present context, the term "impregnation resin" refers to a resin, the molar mass of which is less than the molar mass of the adhesive resin, so that the impregnation resin is absorbed at least partly in the fibres of the wood veneers of the wood-veneer layers.

In one preferred embodiment, the same basic type of resin, which is used as the adhesive resin, but which has a smaller molar mass than the corresponding polymer of the adhesive resin, is used as the impregnation resin. This being the case, an impregnation resin consisting of phenol resin or particularly phenol-formaldehyde resin is used with an adhesive resin consisting of phenol resin or particularly phenol-formaldehyde resin, and correspondingly an impregnation resin consisting of melamine-formaldehyde resin is used as the impregnation resin with an adhesive resin consisting of melamine-formaldehyde resin.

Generally the molar mass (weight-centred molar mass) is at least 20 %, most suitably at least 40 %, particularly at least 60 %, possibly at least 90 % smaller than the molar mass of the adhesive resin.

The molar mass varies according to the type of resin and for an adhesive resin it is typically about 500 - 15 000 g/mol.

Bisphenol-F epoxy resin can be given as a particular example of an impregnation resin.

Generally the impregnation resin has a relatively low viscosity (500-3 000 m Pa), and it is used in a solvent-free form or with large solids contents.

In the present connection, the term "single pressing" refers to a method, in which all the desired component layers, i.e. material layers and adhesive layers, are stacked at once to form a blank and the sheet is formed in a single pressing stage.

As stated above, the present technology relates to a method for manufacturing a laminated wood-veneer product, in which the wood-veneer layers are glued to each other in an increased temperature and pressure, in such a way that at least some of the wood-veneer layers are impregnated with impregnation resin.

The sheet structure according to the invention can, in its totality, be manufactured by using a single pressing. It is also possible to manufacture a separate body layer and an outer layer with intermediate layers, which after this are joined together, for example, by stacking them to form a blank and pressing them together.

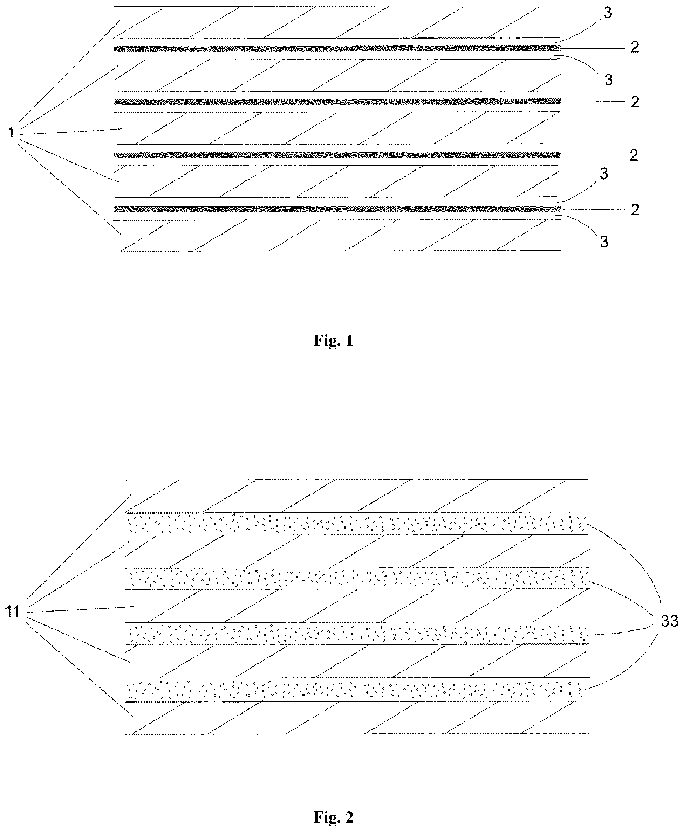

Figures 1 and 2 show two alternative laminated wood-veneer products.

The laminated wood-veneer product of Figure 1 includes several layers of wood-based veneer 1. Placed between the veneer layers are carrier layers 2, with the aid of which impregnation resin is brought between the wood-veneer layers. All the layers have been joined to each other by adhesive resin layers 3.

In the laminated wood-veneer product of Figure 2, a liquid impregnation resin has been absorbed in the wood veneers 11, and an essentially dry adhesive resin 33, which in hot pressing has joined the layers to each other, has been brought between the wood veneers.

In both cases, coniferous or deciduous wood veneer is typically used as the wood-based veneer layers. And any of the resins listed above are used as the adhesive resin and correspondingly as the impregnation resin.

The thicknesses of the individual veneers can vary, so that in one embodiment at least some of the veneers are thicker or thinner than the rest of the veneers. In another embodiment all the veneers of the present wood-based product are of the same thickness.

Generally the thickness of the veneers is in the range of 0.1-10 mm. Typically, the thickness of the veneer is about 0.4-5 mm, particularly about 0.5-4 mm, most suitably about 0.7-3.8 mm, and usually 1.0-3.0 mm, e.g. 1.3-2.0 mm.

In one embodiment, 0.1-100 parts by weight, particularly 1-75 parts by weight, of the impregnation resin relative to the adhesive resin's 100 parts by weight is absorbed in the wood-veneer layers.

In a particularly preferred embodiment, the impregnation resin is brought between the wood-veneer layers with the aid of a layer-like carrier, particularly a sheet or plate-like carrier. Typically paper or board sheets, a paper or board web, dry paper, fabric, felt, non-woven fabric, or a polymer film or sheet are used as the layer-like carrier.

When the impregnation resin is brought between the wood-veneer layers on top of a carrier, the amount of impregnation resin is about 10-500 parts by weight, particularly 20-350 parts by weight, relative to the carrier's 100 parts by weight. Preferably the impregnation resin is brought between the wood-veneer layers with the aid of the carrier as at least mainly touch dry, and even more preferably, as pre-hardened.

When the layer-like carrier containing impregnation resin has been brought between the wood veneers, the impregnation resin on the carrier mixes with the adhesive resin used for gluing the veneers due to the effect of pressure and temperature in the pressing stage, so that at least some part of the impregnation resin mixes with the veneers. This achieves not only a good glued joint, but also the absorption in the veneers of effective agents along with the impregnation resin.

It is also possible to absorb liquid impregnation resin in the wood veneers, to stack the undried wood veneers containing the impregnation resin on top of each other, to bring essentially dry adhesive resin or powdered resin between the wood veneers, and to glue the wood-veneer layers to each other, with the aid of the adhesive resin, at an increased temperature and pressure, in order to form a laminated wood-veneer product. Due to the effect of the pressure and temperature in the pressing stage, the adhesive resin mixes with the impregnation resin used to impregnate the veneers, whereby at least some part of the adhesive resin is absorbed in the veneers and glues together the wood-veneer product.

It is further possible to impregnate the wood veneers with liquid impregnation resin, in which powdered resin is mixed, to stack the undried wood veneers containing the impregnation resin and the powdered resin on top of each other, and to glue the wood-veneer layers onto each other at an increased temperature and pressure, in order to form a laminated wood-veneer product.

An effective agent, especially an effective agent that alters the chemical, mechanical, or microbiological properties of the veneers, such as their rot resistance, insect resistance, fire resistance, or deflection, impact, compressive and/or tensile strength, can be brought between the veneer layers along with the impregnation resin. The amount of the effective agent is preferably about 0.1-35 parts by weight relative to 100 parts by weight of the resin.

Examples of wood preservatives are as such known organic or inorganic biocides or similar agents with a wood-preserving effect, as well as mixtures of two or more biocides or preservative agents.

Examples of biocides are IPBC (3-iodo 2-propynyl butyl carbamate), propiconazole, tebuconazole, and cypermethrin, and mixtures of these. Alternatively, the wood preservative can be a non-biocide, such as tall oil and its derivatives, or tall-oil pitch and its raffinates and derivatives.

Fire retardant is typically a salt of an acid. Examples include salts of formic acid, citric acid, phosphoric acid, phosphonic acid, or boric acid.

It should be noted as well that impregnation resin itself acts at least partly as an effective agent, particularly as a wood preservative, because it fills the pores in wood veneer and thus prevents water from penetrating the pores.

It is also possible to activate the veneer surfaces to be glued, for example, by corona or plasma treatment or chemically to further increase the success of the glued j oint. An example of a chemical activation treatment is a treatment with an alkali, such as an alkali metal or alkaline earth metal hydroxide or carbonate, such as sodium hydroxide.

As stated above, phenol-formaldehyde resin, which can contain a hardener, can be used as the adhesive resin. A typical hardener is an alkaline substance, such as an alkali metal or an alkaline earth metal hydroxide or carbonate.

The impregnation resin too can contain a hardener. In the case of epoxy resins, nitrogenous hardeners, such as aliphatic or aromatic amines, for example, can be used.

In the case of both the adhesive resin and the impregnation resin, hardeners, which act at room temperature or a high temperature of, for example, more than 100 °C, can be used. It is also possible to use at least mixtures, which contain hardeners that act at two different temperatures, whereby the adhesive and/or impregnation resin is pre-hardened by the effect of a low-temperature hardener and the final hardening takes place by the effect of a high-temperature hardener. In such a hardener mixture, the low-temperature hardener content is chosen in such a way that in the pre-hardening at most 50 %, especially at most 25 % of the ultimate bending strength is achieved.

If the adhesive resin does not contain a hardener, hardening can be achieved in the pressing stage, for example, by extending the time or by raising the temperature.

The method described above can contain other stages in addition to the aforementioned stages. Thus after the spreading of the resin, the impregnated and/or glue-coated veneers can be allowed to stand without pressure. After stacking and before hot pressing the veneers are preferably pre-pressed, preferably for 5-40 minutes at a temperature of 10-40°C and a pressure of 0.1-1.0 MPa. The hot pressing of the wood veneers stacked on top of each other is performed preferably for at least 5 minutes and, according to thickness, for up to 120 minutes and at a temperature of 100-160°C, whereby the pressure is typically 1-3 MPa. The pressing pressure can, however, be raised higher than this (e.g. to the range > 3 MPa-10 MPa), if it is wished to increase density. Finally, the sheets can be trimmed, sanded, and sorted.

The laminated wood-veneer product manufactured according to the invention can be used, for example, as a transportation or building board, as a fire-retardant board, as a transportation base, or as casting shuttering or a glued laminated product. The laminated wood-veneer product manufactured according to the invention is particularly suitable for applications, in which moisture, rot, insect, or fire resistance is required in the wood-veneer product.

### Reference publications

### Patent publications

FI-121623
GB 567878 B
US 2008020200 A1
US 3649442 A
US 4207379 A
US 3470134 A

## Claims

1. A method for manufacturing a laminated wood-veneer product, in which method
- several wood-veneer layers are stacked on top of each other, and
- the wood-veneer layers are glued onto each other with the aid of an adhesive resin at an increased pressure in order to form the laminated wood-veneer product,
**characterized in that**
- at least some of the wood-veneer layers are impregnated with an impregnation resin before the wood-veneer layers are glued onto each other,
wherein an adhesive resin or adhesive mixture is used to glue the veneers;
wherein the wood-veneer layers are glued to each other at a high temperature and pressure; and
wherein either
- the impregnation resin is brought between the wood-veneer layers on top of a carrier, or
- the wood veneers are impregnated with a liquid impregnation resin, the undried wood veneers containing the impregnation resin are stacked on top of each other, an essentially dry adhesive resin is brought between the wood veneers, and the wood-veneer layers are glued to each other with the aid of the adhesive resin at an increased temperature and pressure, in order to form a laminated wood-veneer product.

2. The method according to claim 1, **characterized in that** the wood-veneer layers are impregnated with an impregnation resin, the molar mass of which is less than the molar mass of the adhesive resin, so that the impregnation resin is absorbed at least partly in the fibres of the wood veneers of the wood-veneer layers.

3. The method according to claim 1 or 2, **characterized in that** 0.1-100 parts by weight, especially 1-75 parts by weight, of the impregnation resin relative to 100 parts by weight of the adhesive resin is absorbed in the wood-veneer layers.

4. The method according to any one of the above claims, **characterized in that** the impregnation resin is brought between the wood-veneer layers on top of a carrier which is a sheet or plate-like carrier.

5. The method according to claim 4, **characterized in that** a paper or board sheet, a paper or board web, dry paper, fabric, felt, non-woven fabric, or a polymer film or sheet is used as a layer-like carrier.

6. The method according to claim 4 or 5, **characterized in that** the amount of impregnation resin is about 10-500 parts by weight, especially 20-350 parts by weight, relative to 100 parts by weight of the carrier.

7. The method according to any one of claims 4-6, **characterized in that** the impregnation resin is brought as at least principally touch dry between the wood-veneer layers.

8. The method according to claim 7, **characterized in that** the impregnation resin is brought as pre-hardened.

9. The method according to any one of claims 4-8, **characterized in that** due to the effect of the pressing-stage pressure and temperature the impregnation resin on the carrier mixes with the adhesive resin used to glue the veneers, so that at least some part of the impregnation resin is absorbed in the veneers.

10. The method according to any one of the above claims, **characterized in that,** along with the impregnation resin, an effective agent is brought between the veneer layers, particularly an effective agent that alters the veneers' chemical, mechanical, or microbiological properties, such as their rot resistance, insect resistance, fire resistance, or deflection, impact, compressive, and/or tensile strength.

11. The method according to claim 10, **characterized in that** there is about 0.1-35 parts by weight of the effective agent relative to the impregnation resin's 100 parts by weight.

12. The method according to any one of the above claims, **characterized in that** an adhesive resin or adhesive mixture which is phenol-formaldehyde resin or melamine-formaldehyde resin, which may contain a hardener, is used to glue the veneers.

13. The method according to any one of the above claims, **characterized in that** the impregnation resin is phenol-formaldehyde resin or melamine-formaldehyde resin, the molar mass of which is about 500 - 15 000 g/mol and which may contain a hardener.

14. The method according to any one of the above claims, **characterized in that** the veneer surface of the finished laminated wood-veneer product is activated by, for example, corona or plasma treatment or chemically.

15. The method according to any one of the above claims, **characterized in that** the manufacturing of the laminated wood-veneer product takes place by hot pressing, especially by single pressing, wherein the pressing is performed at a temperature of 100-160°C and a pressure of 1-10 MPa.

16. A laminated wood-veneer product manufactured according to any one of the above claims.

17. Use of the product according to claim 16 as a transportation or building board, a fire-protection board, a transportation base, or as casting shuttering.

18. Use according to claim 17 in an application in which moisture, rot, insect, or fire resistance is required of the wood-veneer product.

## Patentansprüche

1. Verfahren zur Herstellung eines laminierten Holzfurnierprodukts, wobei bei dem Verfahren
- mehrere Holzfurnierschichten übereinandergestapelt werden, und
- die Holzfurnierschichten mithilfe eines Klebharzes unter erhöhtem Druck aufeinander verklebt werden, um das laminierte Holzfurnierprodukt zu bilden,
**dadurch gekennzeichnet, dass**
- zumindest einige der Holzfurnierschichten wird mit einem Imprägnierharz imprägniert werden, bevor die Holzfurnierschichten aufeinander verklebt werden,
wobei zum Verkleben der Furniere ein Klebharz oder eine Klebmischung verwendet wird;
wobei die Holzfurnierschichten bei hoher Temperatur und hohem Druck miteinander verklebt werden; und
wobei entweder
- das Imprägnierharz auf einem Träger zwischen die Holzfurnierschichten eingebracht wird, oder
- die Holzfurniere mit einem flüssigen Imprägnierharz imprägniert werden, die ungetrockneten Holzfurniere, die das Imprägnierharz enthalten, übereinandergestapelt werden, ein im Wesentlichen trockenes Klebharz zwischen die Holzfurniere eingebracht wird, und die Holzfurnierschichten mithilfe des Klebharzes bei erhöhter Temperatur und erhöhtem Druck miteinander verklebt werden, um ein laminiertes Holzfurnierprodukt zu bilden.

2. Verfahren nach Anspruch 1, **dadurch gekennzeichnet, dass** die Holzfurnierschichten mit einem Imprägnierharz imprägniert werden, dessen Molmasse geringer als die Molmasse des Klebharzes ist, sodass das Imprägnierharz zumindest teilweise in den Fasern der Holzfurniere der Holzfurnierschichten absorbiert wird.

3. Verfahren nach Anspruch 1 oder 2, **dadurch gekennzeichnet, dass** 0,1-100 Gewichtsteile, insbesondere 1-75 Gewichtsteile, des Imprägnierharzes in Bezug auf 100 Gewichtsteile des Klebharzes in den Holzfurnierschichten absorbiert werden.

4. Verfahren nach einem der vorstehenden Ansprüche, **dadurch gekennzeichnet, dass** das Imprägnierharz auf einem Träger, der ein Bogen oder plattenähnlicher Träger ist, zwischen die Holzfurnierschichten eingebracht wird.

5. Verfahren nach Anspruch 4, **dadurch gekennzeichnet, dass** ein Papier- oder Kartonbogen, eine Papier- oder Kartonbahn, trockenes Papier, Gewebe, Filz, Vliesstoff oder eine Polymerfolie oder -bogen als schichtähnlicher Träger verwendet wird.

6. Verfahren nach Anspruch 4 oder 5, **dadurch gekennzeichnet, dass** die Menge an Imprägnierharz etwa 10-500 Gewichtsteile, insbesondere 20-350 Gewichtsteile, in Bezug auf 100 Gewichtsteile des Trägers beträgt.

7. Verfahren nach einem der Ansprüche 4-6, **dadurch gekennzeichnet, dass** das Imprägnierharz zumindest vorwiegend grifftrocken zwischen die Holzfurnierschichten gebracht wird.

8. Verfahren nach Anspruch 7, **dadurch gekennzeichnet, dass** das Imprägnierharz vorgehärtet eingebracht wird.

9. Verfahren nach einem der Ansprüche 4-8, **dadurch gekennzeichnet, dass** sich das Imprägnierharz auf dem Träger aufgrund der Wirkung von Pressstufendruck und Temperatur mit dem zum Verkleben der Furniere verwendeten Klebharz vermischt, sodass zumindest ein Teil des Imprägnierharzes in den Furnieren absorbiert wird.

10. Verfahren nach einem der vorstehenden Ansprüche, **dadurch gekennzeichnet, dass** zusammen mit dem Imprägnierharz ein Wirkstoff zwischen die Furnierschichten eingebracht wird, insbesondere ein Wirkstoff, der die chemischen, mechanischen oder mikrobiologischen Eigenschaften der Furniere, wie ihre Fäulnisbeständigkeit, Insektenbeständigkeit, Feuerbeständigkeit oder Durchbiegungs-, Schlag-, Druck- und/oder Zugfestigkeit verändert.

11. Verfahren nach Anspruch 10, **dadurch gekennzeichnet, dass** etwa 0,1-35 Gewichtsteile des Wirkstoffs in Bezug auf 100 Gewichtsteile des Imprägnierharzes vorhanden sind.

12. Verfahren nach einem der vorstehenden Ansprüche, **dadurch gekennzeichnet, dass** ein Klebharz oder eine Klebmischung, bei der es sich um Phenol-Formaldehyd-Harz oder Melamin-Formaldehyd-Harz handelt, das einen Härter enthalten kann, zum Verkleben der Furniere verwendet wird.

13. Verfahren nach einem der vorstehenden Ansprüche, **dadurch gekennzeichnet, dass** das Imprägnierharz Phenol-Formaldehyd-Harz oder Melamin-Formaldehyd-Harz ist, dessen Molmasse etwa 500 - 15.000 g/mol beträgt und das einen Härter enthalten kann.

14. Verfahren nach einem der vorstehenden Ansprüche, **dadurch gekennzeichnet, dass** die Furnieroberfläche des fertigen laminierten Holzfurnierprodukts beispielsweise durch Corona- oder Plasmabehandlung oder chemisch aktiviert wird.

15. Verfahren nach einem der vorstehenden Ansprüche, **dadurch gekennzeichnet, dass** die Herstellung des laminierten Holzfurnierprodukts durch Heißpressen, insbesondere durch Einzelpressen, erfolgt, wobei das Pressen bei einer Temperatur von 100- 160°C und einem Druck von 1-10 MPa erfolgt.

16. Laminiertes Holzfurnierprodukt, das nach einem der vorstehenden Ansprüche hergestellt wird.

17. Verwendung des Produktes nach Anspruch 16 als Transport- oder Bauplatte, Brandschutzplatte, Transportunterlage oder als Gussschalung.

18. Verwendung nach Anspruch 17 in einer Anwendung, bei der vom Holzfurnierprodukt Feuchtigkeits-, Fäulnis-, Insekten- oder Feuerbeständigkeit erfordert wird.

## Revendications

1. Procédé de fabrication d'un produit de placage de bois stratifié, dans lequel procédé
- plusieurs couches de placage de bois sont empilées les unes sur les autres, et
- les couches de placage de bois sont collées les unes sur les autres à l'aide d'une résine adhésive à une pression accrue afin de former le produit de placage de bois stratifié,
**caractérisé en ce que**
- au moins certaines des couches de placage de bois sont imprégnées d'une résine d'imprégnation avant que les couches de placage de bois ne soient collées les unes sur les autres,
dans lequel une résine adhésive ou un mélange adhésif sont utilisés pour coller les placages ;
dans lequel les couches de placage de bois sont collées les unes aux autres à une température et une pression élevées ; et
dans lequel soit
- la résine d'imprégnation est apportée entre les couches de placage de bois sur un support, soit
- les placages de bois sont imprégnés d'une résine d'imprégnation liquide, les placages de bois non séchés contenant la résine d'imprégnation sont empilés les uns sur les autres, une résine adhésive essentiellement sèche est apportée entre les placages de bois et les couches de placage de bois sont collées les unes aux autres à l'aide de la résine adhésive à une température et une pression accrues, afin de former un produit de placage de bois stratifié.

2. Procédé selon la revendication 1, **caractérisé en ce que** les couches de placage de bois sont imprégnées d'une résine d'imprégnation dont la masse molaire est inférieure à la masse molaire de la résine adhésive, de telle sorte que la résine d'imprégnation soit absorbée au moins partiellement dans les fibres des placages de bois des couches de placage de bois.

3. Procédé selon la revendication 1 ou 2, **caractérisé en ce que** 0,1 à 100 parties en poids, en particulier 1 à 75 parties en poids, de la résine d'imprégnation par rapport à 100 parties en poids de la résine adhésive sont absorbées dans les couches de placage de bois.

4. Procédé selon l'une quelconque des revendications précédentes, **caractérisé en ce que** la résine d'imprégnation est apportée entre les couches de placage de bois sur un support qui est un support en feuille ou en plaque.

5. Procédé selon la revendication 4, **caractérisé en ce qu'**une feuille de papier ou de carton, une bande de papier ou de carton, du papier sec, du tissu, du feutre, un non-tissé ou un film ou une feuille polymère sont utilisés comme support en couche.

6. Procédé selon la revendication 4 ou 5, **caractérisé en ce que** la quantité de résine d'imprégnation est environ 10 à 500 parties en poids, en particulier 20 à 350 parties en poids, par rapport à 100 parties en poids du support.

7. Procédé selon l'une quelconque des revendications 4-6, **caractérisé en ce que** la résine d'imprégnation est apportée au moins principalement sèche au toucher entre les couches de placage de bois.

8. Procédé selon la revendication 7, **caractérisé en ce que** la résine d'imprégnation est apportée prédurcie.

9. Procédé selon l'une quelconque des revendications 4-8, **caractérisé en ce que,** en raison de l'effet de la pression et de la température de l'étape de pressage, la résine d'imprégnation sur le support se mélange à la résine adhésive utilisée pour coller les placages, de telle sorte qu'au moins une partie de la résine d'imprégnation soit absorbée dans les placages.

10. Procédé selon l'une quelconque des revendications précédentes, **caractérisé en ce que,** conjointement avec la résine d'imprégnation, un agent efficace est apporté entre les couches de placage, particulièrement un agent efficace qui modifie les propriétés chimiques, mécaniques ou microbiologiques des placages, telles que leur résistance à la pourriture, leur résistance aux insectes, leur résistance au feu ou leur résistance à la déflexion, à l'impact, à la compression et/ou à la traction.

11. Procédé selon la revendication 10, **caractérisé en ce qu'**il y a environ 0,1 à 35 parties en poids de l'agent efficace par rapport aux 100 parties en poids de la résine d'imprégnation.

12. Procédé selon l'une quelconque des revendications précédentes, **caractérisé en ce qu'**une résine adhésive ou un mélange adhésif qui est une résine phénol-formaldéhyde ou une résine mélamine-formaldéhyde, qui peut contenir un durcisseur, est utilisé pour coller les placages.

13. Procédé selon l'une quelconque des revendications précédentes, **caractérisé en ce que** la résine d'imprégnation est une résine phénol-formaldéhyde ou une résine mélamine-formaldéhyde dont la masse molaire est d'environ 500 à 15 000 g/mol et qui peut contenir un durcisseur.

14. Procédé selon l'une quelconque des revendications précédentes, **caractérisé en ce que** la surface de placage du produit de placage de bois stratifié fini est activée, par exemple, par un traitement corona ou au plasma, ou chimiquement.

15. Procédé selon l'une quelconque des revendications précédentes, **caractérisé en ce que** la fabrication du produit de placage de bois stratifié a lieu par pressage à chaud, en particulier par pressage simple, dans lequel le pressage est effectué à une température de 100 à 160 °C et une pression de 1 à 10 MPa.

16. Produit de placage de bois stratifié fabriqué selon l'une quelconque des revendications précédentes.

17. Utilisation du produit selon la revendication 16 comme panneau de transport ou de construction, panneau de protection anti-incendie, base de transport ou comme coffrage coulé.

18. Utilisation selon la revendication 17 dans une application dans laquelle une résistance à l'humidité, à la pourriture, aux insectes ou anti-incendie est requise pour le produit de placage de bois.
